# FASCICULE DE BREVET EUROPEEN

(11) **EP 3 718 682 B1**
(45) Date de publication et mention de la délivrance du brevet: **04.09.2024**
(21) Numéro de dépôt: 20167530.3
(22) Date de dépôt: 01.04.2020
(51) Int. Cl.: B23P 19/00, B23P 19/04

(54) **INSTALLATION ET PROCEDE DE MONTAGE DE COMPOSANTS DE TYPE AGRAFE SUR UNE PIECE, ET UNITE DE FABRICATION DE PIECES EQUIPEE D'UNE TELLE INSTALLATION**
ANLAGE UND MONTAGEVERFAHREN VON KLAMMERLEMENTEN AUF EINEM WERKSTÜCK, UND HERSTELLUNGSEINHEIT VON WERKSTÜCKEN, DIE MIT EINER SOLCHEN ANLAGE AUSGESTATTET IST
FACILITY AND METHOD FOR MOUNTING CLIP COMPONENTS ON A PART, AND PARTS MANUFACTURING UNIT PROVIDED WITH SUCH AN INSTALLATION

(30) Priorité: 01.04.2019 FR 1903471
(43) Date de publication de la demande: 07.10.2020
(73) Titulaire: Technovatis, 59136 Wavrin (FR)
(72) Inventeur: DELATTRE, Jean-Yves, 59134 Fournes-en-Weppes (FR)
(74) Mandataire: RVDB

(56) Documents cités:
- WO-A1-2017/216730
- DE-U1- 20 215 245
- FR-A1- 3 004 978
- FR-A1- 3 042 433
- JP-A- 2015 093 348
- JP-A- 2017 047 516
- KR-A- 20090 089 110

## Description

### Domaine technique

La présente invention concerne une installation de montage de composants de type agrafe sur des pièces. De tels composants sont destinés à être mis en place par encliquetage sur les pièces, elles-mêmes destinées à être agrafées sur des supports. Pour cela, les composants comprennent une tête configurée pour être encliquetée sur la pièce et un corps configuré pour être encliqueté sur le support lors de l'agrafage ultérieur de ladite pièce. L'invention concerne également un procédé de montage de composants de type agrafe sur des pièces, ainsi qu'une unité de fabrication de pièces qui comporte une telle installation de montage de composants sur les pièces fabriquées.

L'invention sera mise en oeuvre par les fabricants de dispositifs de distribution de composants et de dispositifs de montage de composants. Elle trouvera son application notamment chez les équipementiers, par exemple dans le domaine automobile, pour l'assemblage de composants sur des pièces d'habitacle de véhicules en vue de l'assemblage ultérieur de ces pièces sur des châssis de véhicules.

### Etat de la technique

Dans le domaine de l'industrie automobile, par exemple, de nombreuses pièces d'un véhicule sont fixées sur la structure du véhicule au moyen de composants du type agrafe. Pour cela, les agrafes sont prémontées sur les pièces qui disposent sur leur face interne de zones d'enclenchement de ces agrafes, lesdites zones d'enclenchement étant encore dénommées des porte-agrafes. Les pièces munies desdites agrafes sont ultérieurement fixées sur la structure du véhicule par encliquetage desdites agrafes sur ladite structure. Des installations permettent de réaliser le montage préalable des agrafes sur les pièces.

Traditionnellement, de telles installations comprennent un dispositif de distribution en composants qui permet l'acheminement successif de composants jusqu'à une zone de sortie où le composant, en attente dans ladite zone de sortie, est saisi et/ou poussé pour être encliqueté sur une zone d'enclenchement agencée sur la face interne de la pièce. Cette opération d'encliquetage du composant sur la pièce peut être réalisée par un robot ou un système automatisé qui saisit le composant et vient le pousser pour le monter en force sur la zone d'enclenchement de la pièce, voire par un système à percussion qui pousse directement le composant afin de le monter en force sur ladite zone d'enclenchement. La demanderesse a déjà travaillé sur divers dispositifs de distribution de composants de type agrafe et sur divers dispositifs de montage de composants de type agrafe sur des pièces, lesquels apparaissent dans les demandes de brevet publiées sous les numéros FR2933631A1, FR2962721A1, FR3004133A1, FR3004978A1, FR3029901A1 et FR3042433A1. Ces diverses conceptions de dispositifs de distribution de composants et de dispositifs de montage de composants de type agrafe permettent une réduction des coûts de fabrication et, en outre, une implantation directement sur les postes de travail d'une chaîne de montage ou d'une cellule de montage en optimisant l'encombrement et la sécurité. Il est aussi connu des dispositifs de distribution de composants qui comportent un bol vibrant acheminant les composants jusqu'à une zone de sortie où le composant peut être saisi par un robot manipulateur ou un système manipulateur automatisé qui monte en force le composant directement sur une zone d'enclenchement de la pièce.

Les installations de montage de composants telles que mises en oeuvre actuellement peuvent présenter des inconvénients divers. En effet, le temps d'encliquetage des composants sur les zones d'enclenchement des pièces peut être important, en particulier lorsque cette opération est réalisée par le robot manipulateur ou le système manipulateur automatisé servant à sortir les pièce de la presse à injection sur l'unité de fabrication desdites pièces, ledit robot manipulateur ou ledit système manipulateur automatisé prenant les composants des zones de sortie sur le ou les dispositifs de distribution de composants pour les encliqueter directement sur toutes les zones d'enclenchement de la pièce. En outre, cet encliquetage des composants sur les zones d'enclenchement de la pièce nécessite un effort important, de l'ordre de 5 daN à 10 daN, ce qui nécessite l'utilisation de pinces manipulatrices, du type électrique ou pneumatique, capables d'exercer un tel effort. Le robot manipulateur ou le système manipulateur automatisé doit donc être dimensionné en conséquence afin de pouvoir recevoir et manipuler de telles pinces, ce qui augmente généralement le coût de l'installation. Par ailleurs, l'environnement du robot manipulateur ou du système manipulateur automatisé est généralement encombré par les circuits électriques ou pneumatiques servant à l'alimentation de ces pinces, ce qui peut réduire les déplacements dans l'espace dudit robot manipulateur ou dudit système manipulateur automatisé et contribue aussi à augmenter sa taille.

Lorsque ces installations sont mises en oeuvre au moyen de dispositifs de montage de composants de type agrafe sur des pièces prévoyant un système de percussion permettant l'encliquetage d'un composant sur une zone d'enclenchement, tel que figurant dans la demande de brevet FR3004978A1, l'implantation d'une telle installation peut parfois être complexe en fonction de la forme de la pièce et de la position des zones d'enclenchement sur la face interne de celle-ci. En outre, une telle installation est difficilement adaptable en cas d'une modification de la pièce et de l'implantation des zones d'enclenchement sur la face interne de celle-ci ; en effet, cela peut nécessiter une modification importante du rail de guidage permettant l'acheminement d'un composant du système d'extraction dudit composant placé dans un magasin, jusqu'à la zone de sortie dudit rail où est agencé ledit système de percussion.

### Résumé de l'invention

La présente invention a pour objectif de pallier les inconvénients précités en concevant une installation de montage d'au moins un composant de type agrafe sur au moins une pièce, la pièce comprenant une face interne munie d'au moins une zone d'enclenchement d'un composant. Un tel composant comporte une tête configurée pour être encliquetée sur une zone d'enclenchement de la pièce et un corps configuré pour être encliqueté sur un support lors de l'agrafage ultérieur de ladite pièce sur ledit support. L'installation comprend au moins un dispositif de distribution de composants configuré pour acheminer successivement des composants jusqu'à au moins une zone de sortie. Un tel dispositif de distribution peut par exemple comporter des caractéristiques comparables à celles des distributeurs de composants décrits dans les demandes de brevet FR2933631A1, FR2962721A1 et FR3042433A1. On pourrait toutefois envisager également des dispositifs de distribution de composants du type bol vibrant qui acheminent des composants jusqu'à une ou plusieurs zones de sortie.

Selon l'invention et conformément à la revendication 1, l'installation comprend au moins une tête de montage, chaque tête de montage étant munie d'une zone de réception d'un composant, d'une zone d'appui apte à recevoir en appui la face interne de l'au moins une pièce en disposant une zone d'enclenchement de ladite au moins une pièce en regard de la zone de réception de l'au moins une tête de montage. Chaque tête de montage est munie également d'un système de percussion permettant de transférer un composant de la zone de réception vers la zone d'enclenchement de la pièce lorsque ladite pièce est en appui sur l'au moins une tête de montage. En outre, l'installation comprend au moins un dispositif de manipulation configuré pour déplacer au moins un composant de l'au moins une zone de sortie vers la zone de réception de l'au moins une tête de montage, préalablement au positionnement de l'au moins une pièce en appui sur la zone d'appui de l'au moins une tête de montage.

Selon une réalisation, l'installation comprend au moins deux têtes de montage sur lesquelles prend appui au moins une pièce en disposant les zones d'enclenchement de l'au moins une pièce en regard des zones de réception des têtes de montage. Par exemple, l'installation pourrait comprendre deux têtes de montage qui permettent la réception en appui d'une seule pièce munie de deux zones d'enclenchement. L'installation pourrait aussi comprendre deux têtes de montage qui permettent respectivement la réception en appui de deux pièces munies chacune d'une zone d'enclenchement. Le principe resterait le même avec plus de deux têtes permettant la réception en appui d'une seule pièce munie d'autant de zones d'enclenchement que de têtes de montage, voire avec plus de deux têtes permettant la réception en appui d'au moins deux pièces munies chacune d'un nombre de zones d'enclenchement correspondant au nombre de têtes de montage recevant en appui la pièce correspondante.

Selon une réalisation, l'installation comprend au moins trois têtes de montage, les zones d'appuis desdites têtes de montage étant configurées pour assurer un positionnement isostatique d'au moins une pièce en disposant les zones d'enclenchement de ladite au moins une pièce en regard des zones de réception desdites têtes de montage. Par exemple, l'installation pourrait comprendre trois têtes de montage recevant en appui isostatique une seule pièce munie de trois zones d'enclenchement. L'installation pourrait aussi comprendre six têtes de montage, trois premières têtes de montage recevant en appui isostatique une première pièce munie de trois zones d'enclenchement et trois secondes têtes de montage recevant en appui isostatique une seconde pièce munie de trois zones d'enclenchement. Le principe resterait le même avec plus de trois têtes de montage recevant en appui isostatique une seule pièce munie d'un nombre de zones d'enclenchement correspondant au nombre de têtes de montage, voire avec plus de trois têtes de montage recevant en appui isostatique au moins deux pièces munies chacune d'un nombre de zones d'enclenchement correspondant au nombre de têtes de montage recevant en appui la pièce correspondante.

Ainsi, contrairement au robot manipulateur ou au système manipulateur automatisé de l'art antérieur qui prévoit d'encliqueter successivement les composants sur les zones d'enclenchement disposées sur la face interne de la pièce, l'installation selon l'invention permet de réaliser un chargement de tous les composants sur des têtes de montage grâce à un dispositif de manipulation des composants, ce qui permet de réaliser ce chargement en temps masqué pendant l'injection de la pièce sur une presse à injection, ladite pièce pouvant ensuite être positionnée en appui isostatique directement sur les zones de réception des têtes de montage pour réaliser un encliquetage simultané de tous les composants sur les zones d'enclenchement de la pièce. Ainsi, l'installation permet de libérer un temps considérable au robot manipulateur ou au système manipulateur automatisé présent sur la presse à injection des pièces, ce qui permet d'utiliser ledit robot manipulateur ou système manipulateur automatisé pour d'autres opérations, par exemple le découpage des carottes d'injection, le flammage des pièces consistant à exposer la surface de la pièce injectée à une flamme oxydante générée par la combustion d'un hydrocarbure, voire encore le marquage des pièces injectées. Par ailleurs, lors d'une modification de la forme de la pièce et/ou des positions des zones d'enclenchement sur la face interne de ladite pièce, l'installation peut facilement être adaptée en modifiant individuellement les zones d'appui et les zones de réception sur les têtes de montage ainsi que les positions desdites têtes de montage de sorte à recevoir correctement en appui isostatique ladite pièce.

Selon une réalisation de l'installation, celle-ci comprend une structure porteuse et une table munie d'au moins un plateau qui est monté sur la structure porteuse et sur lequel est montée l'au moins une tête de montage. En outre, ladite installation comprend des moyens de montage amovible permettant de changer ou remplacer l'au moins une tête de montage. De préférence, les moyens de montage amovible sont agencés entre la structure porteuse et l'au moins un plateau, ce qui permet de remplacer l'ensemble plateau et têtes de montage lors d'un changement de série de pièces, un opérateur effectuant alors le retrait du ou des plateaux de la table pour en disposer d'autres sur lesquels sont montées des têtes de montage avec un agencement adapté à la nouvelle série de pièces. En variante, ces moyens de montage amovible peuvent être agencés entre l'au moins un plateau de la table et l'au moins une tête de montage, afin d'effectuer directement un remplacement des têtes de montage, ce mode de réalisation étant envisageable lorsque le nombre de têtes de montage sur la table est faible, par exemple une ou deux têtes de montage. Selon ces diverses variantes, l'au moins un plateau de la table peut être positionné dans un plan horizontal ou dans un plan incliné par rapport à l'horizontal, voire à l'extrême limite dans un plan vertical.

Selon une réalisation de l'installation objet de l'invention, celle-ci comprend au moins deux têtes de montage et un dispositif de déplacement des au moins deux têtes de montage. Ce dispositif de déplacement est configuré pour permettre le rapprochement des têtes de montage entre elles dans une position de chargement de composants sur les zones de réception et l'éloignement des têtes de montage dans une position d'encliquetage des composants sur les zones d'enclenchements de l'au moins une pièce disposée en appui sur les zones d'appui desdites têtes de montage. Cette mise en oeuvre a pour avantage de permettre en chargement plus rapide de tous les composants sur les zones de réception des têtes de montage au moyen de l'au moins un dispositif de manipulation, étant donné le rapprochement entre elles de toutes les têtes de montage. Cela présente également pour avantage de simplifier les déplacements de l'au moins un dispositif de manipulation et, ainsi, la conception dudit au moins un dispositif de manipulation. Selon une réalisation du dispositif de déplacement, celui-ci comprend une table munie d'au moins deux plateaux sur lesquels sont montées les au moins deux têtes de montage, les plateaux étant mobiles entre eux pour passer de la position de chargement de composants à la position d'encliquetage de composants sur la pièce, et inversement. En d'autres termes, le dispositif de déplacement comprend des moyens de translation des plateaux pour les rapprocher les uns des autres dans la position de chargement des composants et les écarter les uns des autres dans la position d'encliquetage de composants sur la ou les pièces. Des variantes sont envisageables pour ce dispositif de déplacement, par exemple des moyens de translation des têtes de montage directement sur une table afin d'écarter ou de rapprocher les têtes de montage les unes vis-à-vis des autres en sorte de passer de la position de chargement des composants à la position d'encliquetage de composants sur la pièce, et inversement.

Selon une réalisation de l'installation objet de l'invention, celle-ci comprend au moins une tête de montage et un dispositif de déplacement de l'au moins une tête de montage, lequel est configuré pour permettre le rapprochement de l'au moins une tête de montage vers l'au moins un dispositif de manipulation de composants, dans une position rapprochée selon laquelle l'au moins un dispositif de manipulation effectue le chargement de l'au moins un composant sur l'au moins une zone de réception, et pour permettre l'éloignement de l'au moins une tête de montage vis-à-vis de l'au moins un dispositif de manipulation de composants, dans une position éloignée selon laquelle l'au moins une tête de montage peut recevoir en appui l'au moins une pièce pour effectuer l'encliquetage de l'au moins un composant sur l'au moins une zone d'enclenchement. Cette mise en oeuvre a aussi pour avantage de permettre un chargement plus rapide de tous les composants sur les zones de réception des têtes de montage au moyen de l'au moins un dispositif de manipulation. Cela présente également pour avantage de simplifier les déplacements de l'au moins un dispositif de manipulation et, ainsi, la conception dudit au moins un dispositif de manipulation. Selon une réalisation du dispositif de déplacement, celui-ci comprend une table munie d'au moins un plateau sur lequel est montée l'au moins une tête de montage, l'au moins un plateau étant mobile pour passer de ladite position rapprochée à ladite position éloignée, et inversement. En d'autres termes, le dispositif de déplacement comprend des moyens de translation de l'au moins un plateau pour le rapprocher ou l'éloigner de l'au moins un dispositif de manipulation de composants.

Selon une réalisation de l'installation objet de l'invention, chaque tête de montage comprend un dispositif d'inclinaison permettant de modifier l'orientation de la zone de réception pour la placer dans une position de chargement d'un composant par l'au moins un dispositif de manipulation ou dans une position de transfert dudit composant vers une zone d'enclenchement de la pièce en position sur les zones d'appui des têtes de montage. Cette mise en oeuvre a également pour avantage de permettre en chargement plus rapide de tous les composants sur les zones de réception des têtes de montage au moyen de l'au moins un dispositif de manipulation, étant donné que les changements d'orientations des têtes de montage favorisent une réduction des mouvements de l'au moins un dispositif de manipulation. Cela présente également pour avantage de simplifier les déplacements de l'au moins un dispositif de manipulation et, ainsi, la conception dudit au moins un dispositif de manipulation.

Selon une réalisation de l'installation objet de l'invention, l'au moins un dispositif de manipulation comporte un robot ou un système de translation trois axes sur lequel est montée au moins une pince, ladite pince permettant de charger un composant depuis une zone de sortie du dispositif de distribution et de décharger ce composant dans une zone de réception d'une tête de montage. Plusieurs pinces pourront être montées sur le robot ou sur le système de translation trois axes, en fonction du nombre de zones de sortie présent sur le ou les dispositifs de distribution de composants et du nombre de têtes de montage présent sur ladite installation. On entend par système de translation « trois axes » le fait que l'au moins une pince peut se déplacer en translation dans un repère trois axes de l'espace ; l'au moins une pince pourra en complément être montée en rotation ou en translation selon un ou deux axes additionnels sur ledit système de translation.

Selon une réalisation où l'au moins un dispositif de manipulation est un robot, celui-ci peut comprendre un système de déplacement dudit robot selon au moins un axe de translation dans le but de miniaturiser ce robot, ledit système de déplacement permettant notamment de rapprocher le robot vers l'au moins un dispositif de distribution en composants pour prendre au moins composant et, inversement, vers l'au moins une tête de montage pour placer l'au moins un composant sur l'au moins une zone de réception de ladite au moins une tête de montage.

Selon une réalisation de l'au moins une pince, celle-ci est mécanique et configurée pour être actionnée sous l'action d'efforts externes exercés sur celle-ci par le dispositif de distribution, l'au moins une tête de montage ou le robot ou système de manipulation trois axes. L'utilisation d'une pince mécanique est possible du fait que le dispositif de manipulation se contente de déplacer les composants des zones de sortie agencées sur le ou les dispositifs de distribution de composants vers les zone de réception agencées sur les têtes de montage, ladite pince mécanique n'ayant par conséquent pas besoin d'exercer des forces importantes, contrairement à l'opération d'encliquetage d'un composant sur une zone d'enclenchement de la pièce, laquelle est réalisée au moyen du système de percussion sur ladite tête de montage. En effet, la pince mécanique exercera un effort de l'ordre de 0,5 daN tandis que le système de percussion exercera un effort de l'ordre de 5 daN à 10 daN. L'utilisation de pince mécanique évite d'alourdir la tête du dispositif de manipulation (robot ou système de manipulation trois axes), ce qui contribue à réduire la taille dudit dispositif de manipulation. En outre, de telles pinces mécaniques évitent également d'encombrer l'environnement du dispositif de manipulation avec des circuits électriques ou pneumatiques, nécessaires dans le cas de pinces électriques ou pneumatiques telles que prévues selon l'art antérieur.

Selon une réalisation de l'au moins une pince mécanique, celle-ci comprend une fourche montée en translation sur une platine assujettie au robot ou au système de translation trois axes. Cette fourche est configurée pour translater vis-à-vis de la platine d'une position de chargement dans laquelle un logement sur ladite fourche est apte à recevoir la tête d'un composant, vers une position de déchargement dans laquelle elle se rétracte sur la platine et dégage le logement de ladite tête du composant. En outre, la pince comprend un mécanisme de rappel de la fourche en position de chargement et un mécanisme de butée contre la tête du composant lors du déplacement de la fourche vers sa position de déchargement. Ce mécanisme de butée va pousser la tête du composant logée initialement sur la fourche pour l'engager dans la zone de réception de la tête de montage pendant ledit déplacement de la fourche vers la position de déchargement. De préférence, l'au moins une pince comprend un mécanisme de maintien de la tête d'un composant en position dans le logement de la fourche, ce qui évite l'éjection du composant hors du logement de la pince lorsque celle-ci se déplace lors de l'actionnement du dispositif de manipulation.

Selon une réalisation de l'installation objet de l'invention, celle-ci comprend un mécanisme presseur configuré pour prendre appui et assurer une pression contre une face externe de l'au moins une pièce lorsque la face interne de ladite au moins une pièce repose sur l'au moins une zone d'appui de l'au moins une tête de montage. Ce mécanisme presseur contribue à assurer un positionnement isostatique de l'au moins une pièce sur les zones d'appui des têtes de montage.

Selon une réalisation de l'installation objet de l'invention, chaque tête de montage comporte un système de suspension de la zone d'appui. Ce système de suspension contribue également à assurer un appui convenable de la zone d'appui de la tête de montage sur la face interne de la pièce afin d'assurer un positionnement isostatique de l'au moins une pièce sur les têtes de montage.

Le mécanisme presseur et le système de suspension tels que précités, contribuant à améliorer le positionnement isostatique de l'au moins une pièce sur les zones d'appui des têtes de montage, ont d'autant plus d'importance lorsque les pièces sortent tout juste de la presse d'injection et sont encore malléables. Ainsi, on garantit de venir positionner convenablement les zones d'enclenchement sur la face interne de la pièce en regard des zones de réception des composants sur les têtes de montage.

L'invention concerne également, conformément à la revendication 16, une unité de fabrication de pièces destinées à être agrafées ultérieurement sur des supports au moyens de composants de type agrafe, la pièce comprenant une face interne munie de zones d'enclenchement et le composant comportant une tête configurée pour être encliquetée sur une zone d'enclenchement de la pièce et un corps configuré pour être encliqueté sur un support lors dudit agrafage ultérieur. Selon l'invention, l'unité de fabrication comprend au moins une presse à injection pour la fabrication des pièces, un robot manipulateur des pièces en sortie de la presse à injection. On entend par robot manipulateur un robot en tant que tel ou un système automatisé permettant de saisir au moins une pièce en sortie de la presse à injection et de la déplacer. En outre, l'unité de fabrication comprenant au moins une installation de montage de composants présentant l'une et/ou l'autre des caractéristiques précitées objets de l'invention.

Selon une réalisation de l'unité de fabrication, le robot manipulateur et l'installation de montage sont configurés pour que le robot manipulateur dépose directement au moins une pièce sur l'au moins une zone d'appui de l'au moins une tête de montage de l'installation de montage de composants, en sorte de réaliser un encliquetage de composants dans l'au moins une zone d'enclenchement sur la face interne de l'au moins une pièce, lesdits composants étant préalablement positionnés sur l'au moins une zone de réception de l'au moins une tête de montage. Ainsi, le robot manipulateur transfert la ou les pièces directement de la sortie de la presse à injection vers l'installation de montage de composants sur laquelle a été réalisé en temps masqué un pré-montage des composants sur les têtes de montage. Selon cette réalisation de l'unité de fabrication, celle-ci comprend un carter de délimitation de l'environnement du robot manipulateur et de la presse à injection. En outre, l'au moins une installation de montage de composants est agencée dans ledit environnement. Ainsi, l'ensemble de l'unité de fabrication est sécurisé.

On peut envisager des variantes de l'unité de fabrication pour lesquelles le robot manipulateur déposerait les pièces en sortie de presse à injection sur un tapis d'évacuation ou sur un tapis convoyeur, les pièces étant alors acheminées jusqu'à l'installation de montage de composants où elles pourront être placées en appui sur les têtes de montage soit par un système de manipulation complémentaire soit par un opérateur. Dans ces cas de réalisation, l'installation de montage de composant disposera de son propre carter de délimitation de l'environnement de ladite installation.

L'invention concerne également, conformément à la revendication 19, un procédé de montage d'au moins un composant de type agrafe sur au moins une pièce, la pièce comprenant une face interne munie d'au moins une zone d'enclenchement et le composant comportant une tête configurée pour être encliquetée sur une zone d'enclenchement de la pièce et un corps configuré pour être encliqueté sur un support lors dudit agrafage ultérieur. Le procédé comprenant :
- une étape d'alimentation en composants au moyen d'au moins un dispositif de distribution en composants, lesdits composants étant acheminés successivement au niveau d'au moins une zone de sortie ;
- une étape de transfert de l'au moins un composant en attente dans l'au moins une zone de sortie vers au moins une zone de réception d'au moins une tête de montage, au moyen d'un dispositif de manipulation des composants ;
- une étape de dépose d'au moins une pièce sur l'au moins une zone d'appui de l'au moins une tête de montage au moyen d'un dispositif de transfert de l'au moins une pièce ;
- une étape d'encliquetage de l'au moins un composant disposé dans l'au moins une zone de réception de l'au moins une tête de montage vers l'au moins une zone d'enclenchement de l'au moins une pièce.

Ainsi, le procédé selon l'invention permet de réaliser en temps masqué les étapes d'alimentation et de transfert précitées, durant le temps d'injection de l'au moins une pièce, tandis que les étapes de dépose et d'encliquetage précitées sont réalisées une fois la pièce prête et fraichement sortie de la presse d'injection, ladite étape d'encliquetage permettant de mettre en place simultanément tous les composants sur les zones d'enclenchement de la pièce.

Selon une réalisation du procédé avec au moins deux têtes de montage, celui-ci comprend une étape de rapprochement des au moins deux têtes de montage précédant l'étape de transfert et une étape d'écartement des au moins deux têtes de montage succédant à l'étape de transfert. Cela permet de transférer plus facilement et plus rapidement les composants des zones de sortie de l'au moins un dispositif de distribution de composants vers les zones de réception des têtes de montage, au moyen du dispositif de manipulation.

Selon une réalisation du procédé, celui-ci comprend une étape de rapprochement de l'au moins une tête de montage vers le dispositif de manipulation de composants, précédant l'étape de transfert, et une étape d'éloignement de l'au moins une tête de montage du dispositif de manipulation de composants, succédant à l'étape de transfert. Cela permet de transférer plus facilement et plus rapidement les composants des zones de sortie de l'au moins un dispositif de distribution de composants vers les zones de réception des têtes de montage, au moyen du dispositif de manipulation.

Selon une réalisation du procédé, celui-ci comprend une étape de changement d'inclinaison de l'au moins une zone de réception de l'au moins une tête de montage pour la disposer dans une orientation préférentielle de transfert du composant par le dispositif de manipulation des composants. Cela permet également de transférer plus facilement et plus rapidement les composants des zones de sortie de l'au moins un dispositif de distribution de composants vers les zones de réception des têtes de montage, au moyen du dispositif de manipulation.

### Brève description des figures

Les caractéristiques et avantages de l'invention apparaîtront à la lecture de la description suivante s'appuyant sur des figures, parmi lesquelles :
[Fig. 1] La figure 1 illustre une vue d'ensemble d'une installation de montage de composants sur une pièce, selon l'invention ;
[Fig. 2] La figure 2 illustre une table munie des têtes de montage, ladite table étant dans une position de chargement des composants sur les têtes de montage ;
[Fig. 3] La figure 3 illustre la table de la figure 2 dans une position de dépose de deux pièces en appui isostatique ;
[Fig. 4] La figure 4 illustre un mode de réalisation d'une tête de montage ;
[Fig. 5] La figure 5 illustre l'installation de la figure 1 avec les têtes de montage en phase de recevoir en appui isostatique deux pièces acheminées par un bras d'un robot manipulateur ;
[Fig. 6] La figure 6 illustre une tête d'un robot munie de trois pinces mécaniques permettant chacune le transfert d'un composant d'une zone de sortie d'un dispositif de distribution vers une zone de réception d'une tête de montage ;
[Fig. 7] La figure 7 illustre une pince mécanique avec un composant placé dans le logement de la fourche de cette pince ;
[Fig. 8] La figure 8 illustre une pince mécanique en approche d'une zone de réception d'une tête de montage pour la réalisation du transfert du composant de la pince mécanique vers la zone de réception de la tête de montage ;
[Fig. 9] La figure 9 illustre un transfert d'un composant d'une pince mécanique vers la zone de réception d'une tête de montage ;
[Fig. 10] La figure 10 illustre la tête du robot en phase de transfert d'un composant sur une tête de montage ;
[Fig. 11] La figure 11 illustre plus en détail la position de la fourche de la pince mécanique vis-à-vis de la zone de réception et de la zone d'appui sur la tête de montage, en phase de transfert du composant du robot vers la tête de montage telle qu'illustrée en figure 10 ;
[Fig. 12] La figure 12 illustre la pince mécanique en position sur la zone de sortie d'un dispositif de distribution de composants, afin de réaliser le transfert du composant dans le logement de la fourche de cette pince mécanique ;
[Fig. 13] La figure 13 illustre selon un autre angle de vue la pince mécanique en position sur la zone de sortie d'un dispositif de distribution de composants ;
[Fig. 14] La figure 14 illustre une unité de fabrication de pièces incorporant une installation de montage de composants sur les pièces ;
[Fig. 15] La figure 15 illustre une variante de l'installation de la figure 1, avec deux robots de manipulation des pinces mécaniques ;
[Fig. 16] La figure 16 illustre une autre variante de l'installation de la figure 1, avec un système de translation trois axes de pinces mécaniques.

### Description détaillée

Dans la suite de la description, le terme installation est utilisé pour désigner l'installation de montage de composants selon l'invention. En outre, les mêmes références seront utilisées pour désigner les caractéristiques identiques ou similaires selon les diverses variantes de réalisation, sauf indication dans le texte.

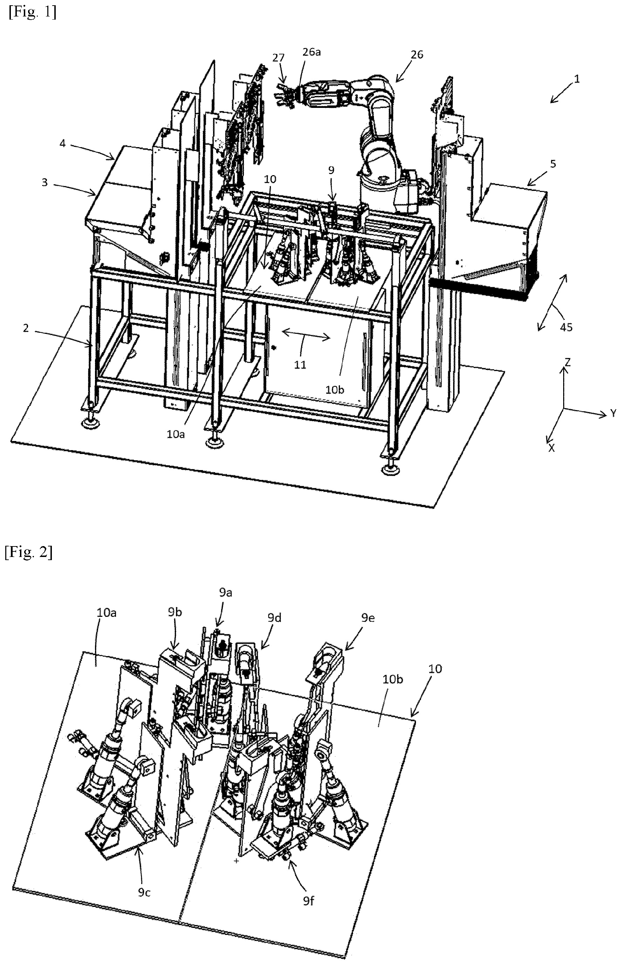

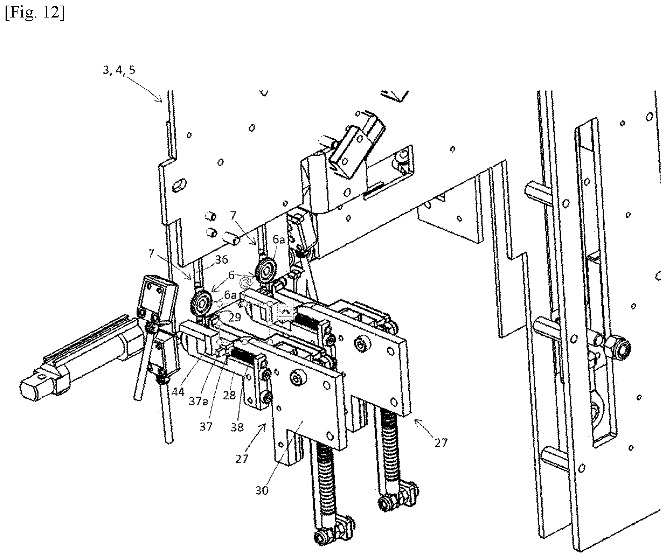

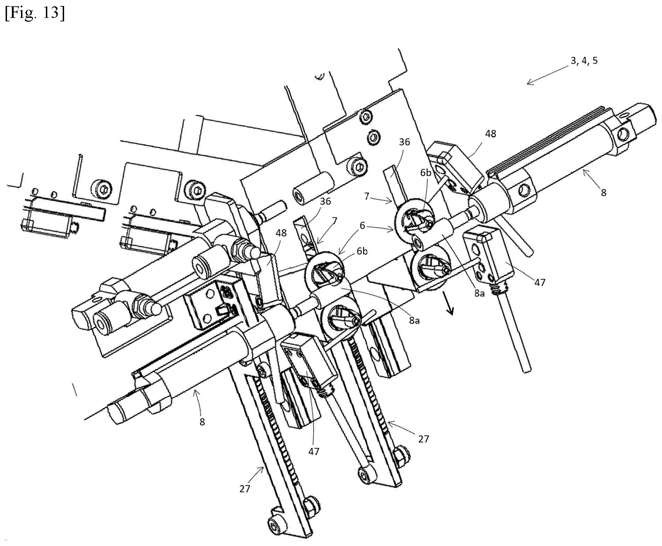

Sur la figure 1, l'installation 1 comprend une structure porteuse 2 sur laquelle sont montés trois dispositifs de distribution 3, 4, 5 de composants 6. Ces dispositifs de distribution 3, 4, 5 présentent de préférence les caractéristiques du dispositif de distribution décrit dans la demande de brevet FR2933631A1. On pourrait aussi envisager de mettre en oeuvre les caractéristiques du dispositif de distribution décrit dans la demande de brevet FR2962721A1 ou dans la demande de brevet FR3042433A1, voire un dispositif de distribution du type bol vibrant. Les composants 6 sont disposés en attente dans des zones de sorties 7 sur lesdits dispositifs de distribution 3, 4, 5, comme l'illustrent les figures 12 et 13. Comme l'illustrent par exemple ces figures 12 et 13, le composants 6 comprend une tête 6a et un corps 6b, chaque zone de sortie 7 recevant la tête 6a d'un composant 6 tandis qu'une tête de piston 8a d'un vérin 8 assure une butée sur le corps 6b dudit composant 6 afin d'assurer provisoirement le maintien du composant 6 dans la zone de sortie 7.

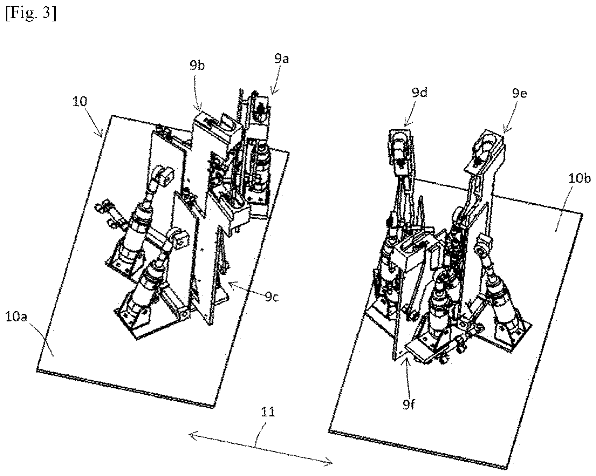

En regard des figures 1 à 3, l'installation 1 comprend des têtes de montage 9 qui sont montées sur une table 10 et, de préférence, toutes d'une conception similaire. Cette table 10 comprend un premier plateau 10a sur lequel sont montées trois premières têtes de montage 9a, 9b, 9c et un second plateau 10b sur lequel sont montées trois secondes têtes de montage 9d, 9e, 9f. Les deux plateaux 10a, 10b sont montés en translation longitudinale l'un par rapport à l'autre dans le sens de la double flèche 11 illustrée en figures 1 et 3, ledit montage en translation étant par exemple réalisé au moyen de liaisons glissières (non illustrées) ou de galets de roulement (non illustrés) agencés entre les plateaux 10a, 10b et la structure porteuse 2 dans le sens de cette double flèche 11. Des actionneurs, par exemple des vérins (non illustrés), permettent de déplacer ces deux plateaux 10a, 10b dans le sens de la double flèche 11, ce qui permet de rapprocher les premières têtes de montage 9a, 9b, 9c vis-à-vis des secondes têtes de montage 9d, 9e, 9f dans la position rapprochée de la figure 2 et inversement de les écarter dans la position écartée de la figure 3.

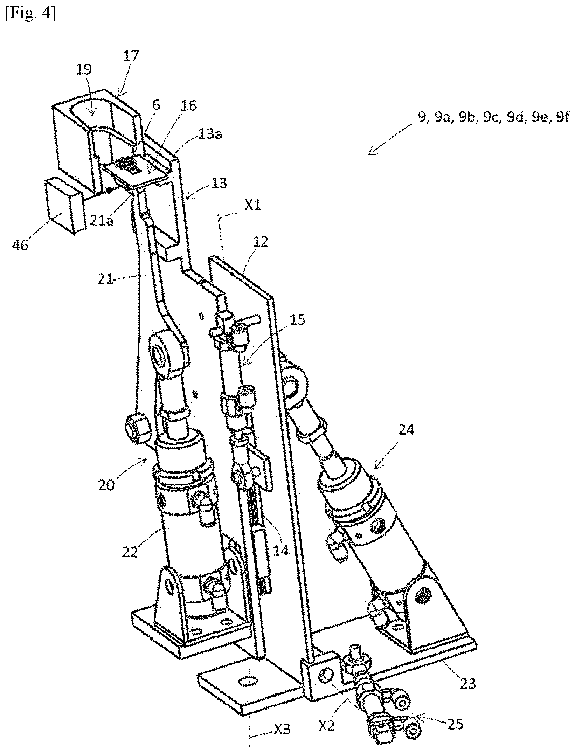

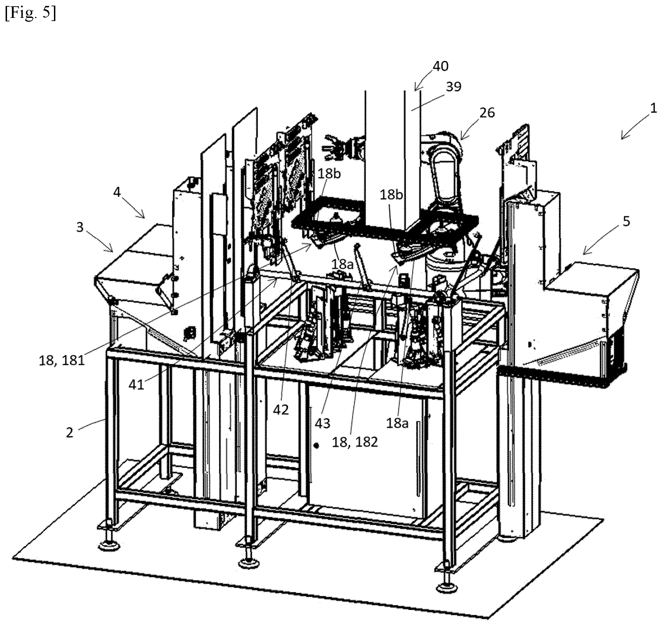

La figure 4 montre plus en détail la conception d'une tête de montage 9. Celle-ci comprend une platine de support 12 sur laquelle est monté en suspension un bras 13 grâce à une glissière 14 d'axe X1 et un vérin de suspension 15. Ce bras 13 comprend dans sa partie supérieure 13a une zone de réception 16 d'un composant 6 et une zone d'appui 17 sur laquelle vient se poser une face interne 18a d'une pièce 18 illustrée en figure 5. Lorsque la face interne 18a de la pièce 18 est en appui sur la zone d'appui 17 de la tête de montage 9, une zone d'enclenchement (non illustrée) présente sur cette face interne 18a de la pièce 18 vient se positionner dans un dégagement 19 présent sur ladite zone d'appui 17 de manière à positionner ladite zone d'enclenchement de la pièce 18 en regard de la zone de réception 16 de la tête de montage 9. Une telle zone d'enclenchement sur une pièce 18 est encore appelée un porte-agrafe. La tête de montage 9 comprend un système de percussion 20 qui comporte un percuteur 21 actionné par un vérin 22, la tête 21a du percuteur 21 permettant de pousser le composant 6 disposé dans la zone de réception 17 afin d'encliqueter ce composant 6 sur la zone d'enclenchement de la pièce 18, ladite zone d'enclenchement étant disposée en regard de ladite zone de réception 16. De préférence, le percuteur 21 appliquera une force comprise entre 5 daN et 10 daN sur le composant 6 pour son encliquetage sur la zone d'enclenchement de la pièce 18. Le vérin 22 et le percuteur 21 sont montés sur le bras 13 de sorte à être également montés en suspension sur la platine de support 12. Tel que schématisé sur cette figure 4, la platine de support 12 est montée à pivotement selon un premier axe X2 vis-à-vis d'un socle 23. Un vérin 24 agencé entre la platine de support 12 et le socle 23 permet de faire pivoter la platine de support 12 selon cet axe X2, ce qui permet de modifier l'inclinaison du bras 13 et l'orientation de la zone de réception 16. De même, le socle 23 est monté à pivotement selon un second axe X3 vis-à-vis du plateau 10a, 10b de la table 10 sur lequel ladite tête de montage 9 est montée. Un vérin 25 agencé entre le socle 23 et le plateau 10a, 10b de la table 10 permet de faire pivoter le socle 23 sur le plateau 10a, 10b et ainsi de modifier l'orientation de la zone de réception 16. Ces changements d'orientations de la zone de réception 16 faciliteront le transfert d'un composant 6 sur la tête de montage 9. Cette tête de montage 9 comportera aussi, de préférence, des moyens de détection 46 de la présence du composant 6 en position dans la zone de réception 16, ce qui permettra de contrôler que les composants 6 sont bien en position sur les têtes de montage 9 puis que ces composants 6 sont bien encliquetés sur la zone d'enclenchement de la pièce 18. Ces moyens de détection 46 comporteront par exemple une cellule de détection photoélectrique ou un capteur de contact à lamelle.

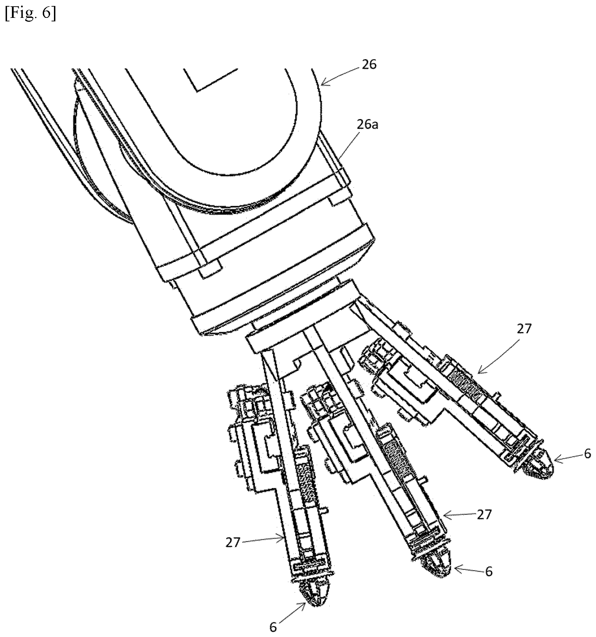

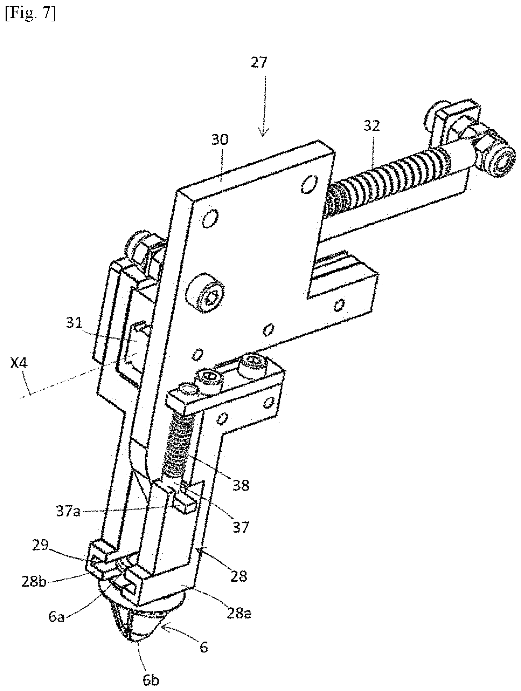

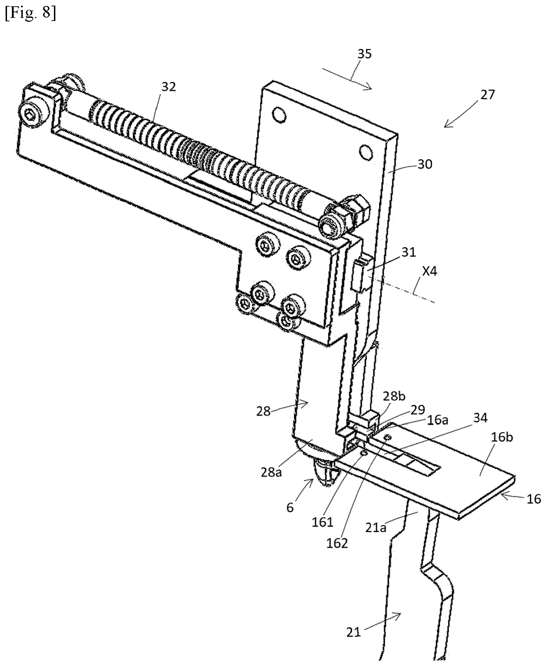

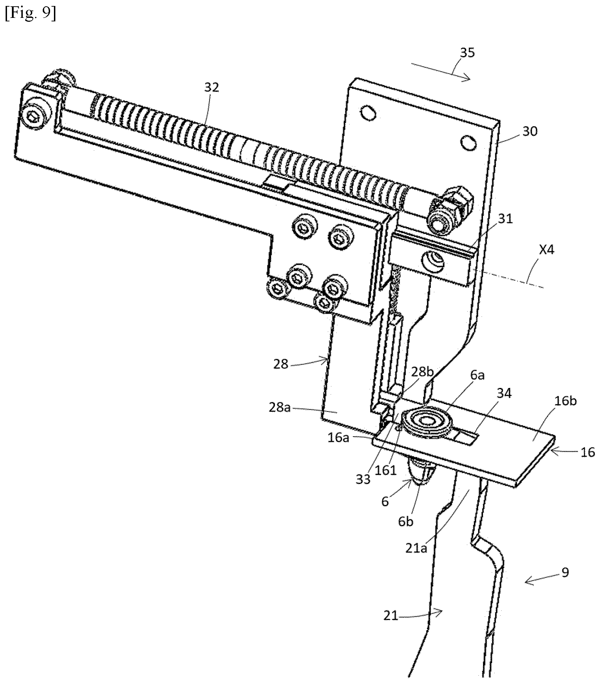

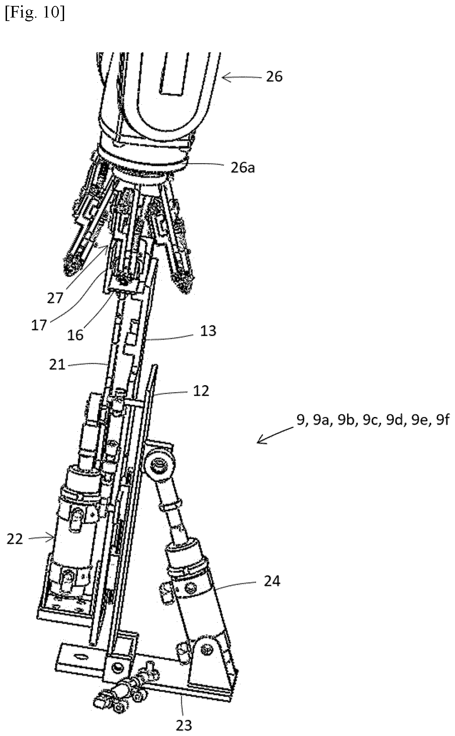

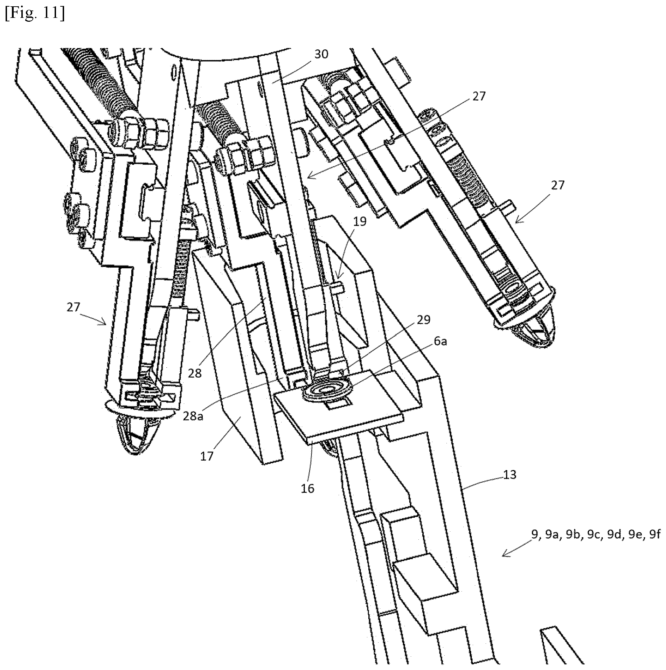

Sur la figure 1, l'installation 1 comprend un robot 26 qui comprend une tête 26a sur laquelle sont montées des pinces mécaniques 27, par exemple trois pinces mécaniques 27 comme le montre plus en détail la figure 6. En regard des figures 7 à 11, chaque pince mécanique 27 comprend une fourche 28 munie d'un logement 29 permettant la réception de la tête 6a d'un composant 6. La pince mécanique 27 comprend une platine 30 qui se fixe sur la tête 26a du robot 26, la fourche 28 étant montée sur une glissière 31 d'axe X4 vis-à-vis de ladite platine 30. Un ressort 32 permet d'assurer un rappel de la fourche 28 dans une position de chargement d'un composant 6 dans le logement 29, telle qu'illustrée en figure 7. La platine 30 comprend à son extrémité un organe de butée 33 qui est placé dans le logement 29 derrière la tête 6a du composant 6 lorsque ladite pince 27 est dans la position de chargement illustrée en figure 7. Lors du transfert d'un composant 6 vers la zone de réception 16 d'une tête de montage 9, le robot 26 amène la pince mécanique 27 de manière à positionner l'extrémité 28a de la fourche 28 dans le dégagement 19 sur la zone d'appui 17, comme illustré en figures 10 et 11. Le robot 26 place ensuite la face avant 28b de la fourche 28 contre la face attenante 16a de la zone de réception 16 de la tête de montage 9, en positionnant le logement 29 de la fourche 28 en regard d'une encoche 34 sur ladite zone d'appui 16. Comme l'illustrent les figures 8 et 9, un déplacement du robot 26 dans le sens de la flèche 35 permet de conserver la face avant 28b de la fourche 28 en appui contre la face attenante 16a de la zone de réception 16 et de déplacer la platine 30 vers l'avant dans le sens de ladite flèche 35 vis-à-vis de la fourche 28, ce qui permet à l'organe de butée 33 sur ladite platine 30 de pousser la tête 6a du composant 6 dans l'encoche 34 sur la zone de réception 16, le composant 6 étant ainsi chargé sur la tête de montage 9. On remarque sur ces figures 8 et 9 que la tête 21a du percuteur 21 est disposée derrière la tête 6a du composant 6 dans le fond de cette encoche 34 sur la zone de réception 16, en attente de réaliser l'opération suivante d'encliquetage de la tête 6a dudit composant 6 sur une zone d'enclenchement de la pièce 18 une fois ladite pièce 18 placée sur la zone d'appui 17. On remarque aussi sur ces figures 8 et 9 que la face supérieure 16b de la zone de réception 16 comprend deux petits plots 161, 162 qui assurent un maintien du composant 6 une fois celui-ci placé dans l'encoche 34, ce qui évite que ledit composant 6 sorte de cette encoche 34, en particulier lorsque la zone de réception 16 est inclinée par rapport à l'horizontale. Ces plots 161, 162 pourraient être remplacés par une lame flexible agencée sur le dessus de la face supérieure 16b de la zone de réception 16 de manière à exercer une légère pression sur la tête 6a du composant 6. Le dégagement du robot 26 vis-à-vis de la tête de montage 9 permet au ressort 32 de ramener la fourche 28 vis-à-vis de la platine 30 dans la position de chargement de la figure 7.

En regard des figures 7, 12 et 13, le chargement d'un composant 6 sur la pince mécanique 27 s'effectue en approchant la face avant 28b de la fourche 28 en regard de la zone de sortie 7 sur le dispositif de distribution 3, 4, 5, le logement 29 sur la fourche 28 étant alors disposé en regard d'une encoche 36 sur ladite zone de sortie 7, dans laquelle est logée la tête 6a du composant 6 en attente d'être transféré et maintenu provisoirement par la tête du piston 8. Le dégagement de la tête du piston 8 permet de libérer le composant 6 qui descend par gravité et vient positionner sa tête 6a dans le logement 29 de la fourche 28. Une tige 37 comprenant un ressort de rappel 38 passe à l'intérieure de la fourche 28 et vient faire pression sur la tête 6a du composant 6 pour le maintenir en position dans le logement 29 de la fourche 28 durant les déplacements de la pince 27 au moyen du robot 26, ce qui évite tout dégagement du composants 6 durant son transfert vers la tête de montage 9. Cette tige 37 comprend un doigt 37a qui vient en butée contre une pièce d'arrêt 44 agencée sur le dispositif de distribution 3, 4, 5, comme illustré en figure 12, ce qui permet de rétracter la tige37 vis-à-vis du logement 29 de la fourche 28 en sorte d'y laisser pénétrer la tête 6a du composant 6 qui descend par gravité. Une fois la pince 27 chargée et dégagée du dispositif de distribution 3, 4, 5, le doigt 37a n'est plus en butée contre la pièce d'arrêt 44, ce qui permet à la tige 37 de revenir en position de maintien du composant 6 dans le logement 29 grâce au ressort de rappel 38. Il est possible de prévoir sur le dispositif de distribution 3, 4, 5 un actionneur du type vérin (non illustré) qui permettra de pousser le composant 6 de l'encoche 36 sur la zone de sortie 7 vers le logement 29 de la fourche 28 afin de garantir un positionnement convenable de la tête 6a du composant 6 dans le logement 29 de la fourche 28 tout en mettant la tige 37 en pression contre ladite tête 6a du composant 6. Des premiers moyens de détection 47 de la présence d'un composant 6 dans le logement 29 de la fourche 28 sont agencés sur le dispositif de distribution 3, 4, 5, ainsi que des seconds moyens de détection 48 de la présence d'un composant 6 dans la zone de sortie 7 du dispositif de distribution 3, 4, 5. Ces moyens de détection 47, 48 seront par exemple des cellules photoélectriques, comme l'illustre la figure 13.

Les composants 6 sont saisis par les pinces 27 au moyen du robot 26 puis transférés sur les zones de réception 16 des têtes de montage 9. Préalablement, les plateaux 10a, 10b sont actionnés pour rapprocher les premières têtes de montage 9a, 9b, 9c des secondes têtes de montage 9d, 9e, 9f, tel que sur la figure 2, et les orientations des zones de réception 16 sur les têtes de montage 9a, 9b, 9c, 9d, 9e, 9f sont modifiées, ce qui permet de réduire les déplacements du robot 26 et des pinces mécaniques 27 sur la tête 26a dudit robot 26 afin d'effectuer le déchargement des composants 6 des pinces mécaniques 27 vers les zones de réception 16 des têtes de montage 9a, 9b, 9c, 9d, 9e, 9f. Une fois les composants 6 montés sur les zones de réception 16 desdites têtes de montage 9a, 9b, 9c, 9d, 9e, 9f, les plateaux 10a, 10b sont actionnés en sens inverse pour reprendre leur position de la figure 3 et les zones de réception 16 des têtes de montage 9a, 9b, 9c, 9d, 9e, 9f reprennent leurs orientations normales afin de bien les repositionner, ainsi que les zones d'appui 17. En regard de la figure 5, un bras 39 d'un robot manipulateur 40 permet de saisir deux pièces 18. La première pièce 181 a sa face interne 18a qui vient en appui isostatique sur les trois zones d'appui 17 des trois premières têtes de montage 9a, 9b, 9c et la seconde pièce 182 a sa face interne 18a qui vient en appui isostatique sur les trois zones d'appui 17 des trois secondes têtes de montage 9d, 9e, 9f. Un mécanisme 41 comporte des bras presseurs 42, 43 qui pivotent et viennent en appui contre la face externe 18b des pièces 181, 182 de sorte à maintenir convenablement ces pièces 181, 182 en appui isostatique sur les zones d'appui 17 des têtes de montage 9a, 9b, 9c, 9d, 9e, 9f. Les vérins de suspension 14 sur ces têtes de montage 9a, 9b, 9c, 9d, 9e, 9f participent également à cette mise en position isostatiques des pièces 181, 182. Puis les percuteurs 21 des têtes de montage 9a, 9b, 9c, 9d, 9e, 9f sont actionnés pour encliqueter simultanément les composants 6 dans les zones d'enclenchement sur les faces internes 18a de ces pièces 181, 182. Une fois les bras presseurs 42, 43 du mécanisme 41 dégagés, les pièces 181, 182 peuvent être évacuées par le bras 39 du robot manipulateur 40.

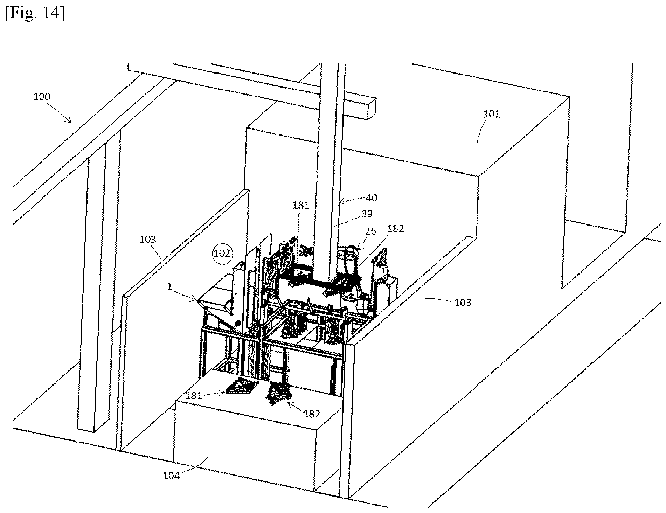

Tel qu'illustré sur la figure 14, l'installation 1 peut être mise en oeuvre sur une unité de fabrication 100 des pièces 18, 181, 182. Cette unité de fabrication 100 comprend une presse à injection 101 permettant la fabrication en moulage par injection desdites pièces 18, 181, 182. L'unité de fabrication 100 comprend également un robot manipulateur 40 permettant d'extraire simultanément deux pièces 181, 182 saisies par le bras 39 dudit robot manipulateur 40. L'installation 1 est placée directement dans l'environnement 102 du robot manipulateur 40 et de la presse à injection 101, un carter 103 permettant d'isoler ledit environnement 102. Une fois les composants 6 encliquetés sur les pièces 181, 182, celles-ci sont déposées par le robot manipulateur 40 sur un tapis d'évacuation 104.

Des variantes d'unité de fabrication 100 pourrait être envisagées en plaçant l'installation 1 en dehors de l'environnement 102 du robot manipulateur 40 et de la presse à injection 101. Dans ce cas, un système manipulateur complémentaire pourra permettre de saisir les pièces sur le tapis d'évacuation 104 ou sur une chaîne de convoyage (non illustrée) des pièces 18, 181, 182 pour venir les placer sur les têtes de montage 9a, 9b, 9c, 9d, 9e, 9f de l'installation 1 et réaliser l'encliquetage des composants 6 sur lesdites pièces 18, 181, 182. On peut aussi envisager qu'un opérateur prenne les pièces 18, 181, 182 disposées sur le tapis d'évacuation 104 ou sur une chaîne de convoyage et les dispose manuellement en position sur les têtes de montage 9a,9b, 9c, 9d, 9e, 9f pour réaliser l'encliquetage des composants 6 sur lesdites pièces 18, 181, 182. Dans ces cas où l'installation 1 sera disposée à l'extérieure de l'environnement 102 du robot manipulateur 40 et de la presse à injection 101, ladite installation 1 sera équipée de son propre carter (non illustrée) permettant d'isoler ladite installation 1 de l'environnement extérieur durant son fonctionnement, ledit carter pouvant être ouvert afin de placer les pièces 18, 181, 182 sur les têtes de montage 9a,9b, 9c, 9d, 9e, 9f.

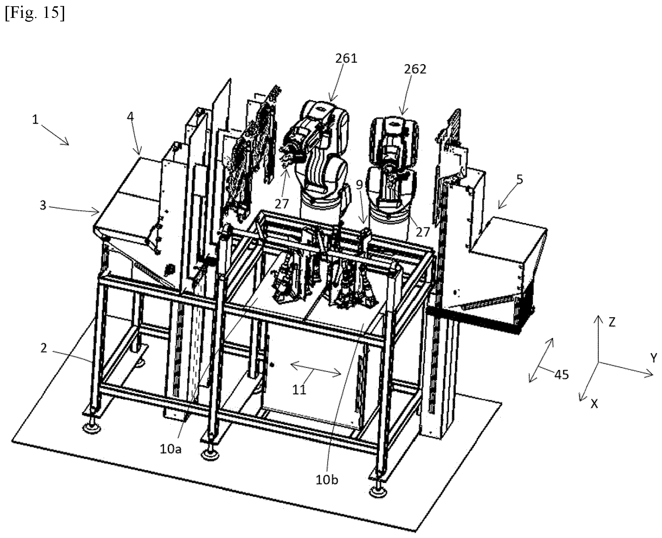

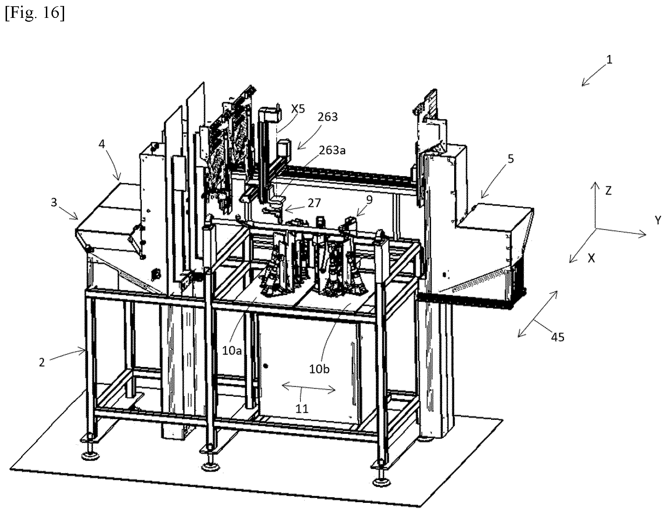

D'autres variantes de l'installation 1 sont envisageables. Sur la figure 15, l'installation 1 comprend deux robots 261, 262 équipés chacun de plusieurs pinces mécaniques 27. Sur la figure 16, les robots 26, 261, 262 sont remplacés par un système de translation à trois axes de déplacement 263 qui déplace une tête 263a munie des pinces mécaniques 27 selon trois axes de translation X, Y, Z pour l'approcher à proximité des têtes de montage 9a,9b, 9c, 9d, 9e, 9f, cette tête 263a étant elle-même montée en rotation selon un axe X5 de sorte à pouvoir changer de pince 27 et en translation selon une trajectoire parallèle à l'axe X4 sur les figures 8 et 9 de sorte à venir positionner la fourche 28 de la pince 27 en regard de la zone de réception 16 de la tête de montage puis engager le composant 6 sur ladite zone de réception 16. La rotation de la tête 263a selon l'axe X5 sera par exemple réalisée au moyen d'un moteur électrique (non illustré) et la translation de la tête 263a selon l'axe X4 sera par exemple réalisée au moyen d'un axe électrique (non illustré).

On peut aussi envisager des variantes de l'installation 1 avec une table 10 sur laquelle les têtes de montage 9a, 9b, 9c, 9d, 9e, 9f seraient directement montées en translation afin de les rapprocher les unes des autres pour le transfert des composants 6 sur les zones de réception 16 de ces têtes de montage 9a, 9b, 9c, 9d, 9e, 9f, puis de les écarter pour les remettre dans leurs positions initiales où elles recevront les pièces 181, 182 en appui isostatique.

Selon une réalisation de l'installation 1, les deux plateaux 10a, 10b peuvent être montés en translation transversale, selon l'axe X, dans le sens de la double flèche 45 illustrée en figures 1, 15 et 16, ledit montage en translation étant par exemple réalisé au moyen de liaisons glissières (non illustrées) ou de galets de roulement agencés entre les plateaux 10a, 10b et la structure porteuse 2 dans le sens de cette double flèche 45. Des actionneurs, par exemple des vérins ou des axes électriques (non illustrés), permettent de déplacer ces deux plateaux 10a, 10b dans le sens de la double flèche 45, ce qui permet de rapprocher les premières têtes de montage 9a, 9b, 9c et les secondes têtes de montage 9d, 9e, 9f vers le ou les robots 26, 261, 262 ou vers le système de translation trois axes 262 en sorte de limiter leur déplacement durant le déchargement des composants sur lesdites têtes de montage 9a, 9b, 9c, 9d, 9e, 9f, et inversement de les écarter de ceux-ci pour revenir en position de mise en place des pièces 181, 182 sur lesdites têtes de montage 9a, 9b, 9c, 9d, 9e, 9f.

Le ou les robots 26, 261, 262 des figures 1 et 15 peuvent également être mobiles en translation selon l'axe Y, en sorte de réduire encore plus leur taille. Pour cela, le ou les robots 26, 261, 262 pourront être montés sur des navettes (non illustrées) montées en glissière selon l'axe Y et actionnées par des vérins ou des axes électriques.

Le nombre de têtes de montage 9 pourra être différent de l'exemple décrit précédemment, en fonction de la pièce et du nombre de composants 6 qu'elle reçoit. Le nombre de dispositifs de distribution 3, 4, 5 pourra également varier. L'installation pourrait aussi recevoir une seule pièce 18 voire plus de deux pièces 181, 182. La table 10 pourrait aussi être constituée de plus de deux plateaux 10a, 10b sur lesquels seront positionnées des têtes de montage 9.

Sur les figures 1, 15 et 16, les plateaux 10a, 10b de la table 10 sont montés dans un plan horizontal. On pourrait toutefois prévoir des variantes de l'installation 1 avec des plateaux 10a, 10b inclinés pour faciliter la mise en place des pièces 181, 182 en appui isostatique sur les têtes de montage 9a, 9b, 9c, 9d, 9e, 9f.

De préférence, ces plateaux 10a, 10b sont montés de manière amovible de la structure porteuse 2 afin de permettre leur retrait et le changement de plateaux 10a, 10b sur lesquels seront montées d'autres têtes de montage 9 agencées différemment et permettant la réception en appui de pièces 18 d'une autre conception.

On peut aussi prévoir des installations 1 sur lesquelles la table 10 comporterait un seul plateau voire plus de deux plateaux 10a, 10b, une ou plusieurs têtes de montage 9 étant agencées sur chacun des plateaux. Lorsqu'une telle installation 1 comportera un seul plateau, celui-ci pourra se déplacer dans le sens de la double-flèche 45 selon l'axe X, afin de permettre le rapprochement de la ou des têtes de montage 9 vers le ou les robots 26, 261, 262 ou vers le système de translation trois axes 263. Lorsque l'installation 1 comportera plus de deux plateaux, lesdits plateaux pourront se rapprocher les uns des autres en les déplaçant dans le sens de la double-flèche 11 selon l'axe Y et/ou dans le sens de la double-flèche 45 selon l'axe X afin de rapprocher toutes les têtes de montage 9 entre elles. Le déplacement des plateaux dans le sens de la double-flèche 45 selon l'axe X permettra également de rapprocher toutes les têtes de montage 9 vers le ou les robots 26, 261, 262 ou vers le système de translation trois axes 263.

## Revendications

1. Installation (1) de montage d'au moins un composant (6) de type agrafe sur au moins une pièce (18, 181, 182), la pièce comprenant une face interne (18a) munie de zones d'enclenchement et le composant (6) comportant une tête (6a) configurée pour être encliquetée sur une zone d'enclenchement de la pièce et un corps (6b) configuré pour être encliqueté sur un support lors de l'agrafage ultérieur de ladite pièce sur ledit support, ladite installation (1) comprenant au moins un dispositif de distribution de composants (3, 4, 5) configuré pour acheminer successivement des composants jusqu'à au moins une zone de sortie (7), l'installation (1) comprenant au moins une tête de montage (9, 9a, 9b, 9c, 9d, 9e, 9f), chaque tête de montage étant munie d'une zone de réception (16) d'un composant, d'une zone d'appui (17) apte à recevoir la face interne de la pièce, et d'un système de percussion (20) permettant de transférer un composant de la zone de réception (16) vers une zone d'enclenchement de la pièce lorsque ladite pièce est en position sur la zone d'appui (17) et ladite installation (1) comprenant au moins un dispositif de manipulation (26, 261, 262, 263) configuré pour déplacer des composants de l'au moins une zone de sortie (7) vers l'au moins une zone de réception (16) préalablement au positionnement de l'au moins une pièce en appui sur l'au moins une zone d'appui (17).

2. Installation (1) selon la revendication 1, laquelle comprend un dispositif de déplacement de l'au moins une tête de montage (9, 9a, 9b, 9c, 9d, 9e, 9f) configuré pour permettre le rapprochement de l'au moins une tête de montage (9, 9a, 9b, 9c, 9d, 9e, 9f) vers l'au moins un dispositif de manipulation de composants (26, 261, 262, 263), dans une position rapprochée selon laquelle l'au moins un dispositif de manipulation effectue le chargement d'au moins un composant sur au moins une zone de réception, et pour permettre l'éloignement de l'au moins une tête de montage vis-à-vis de l'au moins un dispositif de manipulation de composants, dans une position éloignée selon laquelle l'au moins une tête de montage peut recevoir en appui l'au moins une pièce et effectuer l'encliquetage de l'au moins un composant sur l'au moins une zone d'enclenchement.

3. Installation (1) selon l'une quelconque des revendications 1 ou 2, laquelle comprend une structure porteuse et une table munie d'au moins un plateau qui est monté sur la structure porteuse et sur lequel est montée l'au moins une tête de montage, ladite installation comprenant des moyens de montage amovible permettant de changer ou remplacer l'au moins une tête de montage.

4. Installation (1) selon la revendication 3, dans laquelle les moyens de montage amovible sont agencés entre la structure porteuse et l'au moins un plateau.

5. Installation (1) selon l'une quelconque des revendications 3 ou 4, dans laquelle l'au moins un plateau de la table est positionné dans un plan horizontal ou dans un plan incliné par rapport à l'horizontal.

6. Installation (1) selon l'une quelconque des revendications 1 à 5, laquelle comprend au moins deux têtes de montage (9, 9a, 9b, 9c, 9d, 9e, 9f) et un dispositif de déplacement (10a, 10b) des au moins deux têtes de montage (9, 9a, 9b, 9c, 9d, 9e, 9f) configuré pour permettre le rapprochement entre elles des têtes de montage dans une position de chargement de composants sur les zones de réception (16) et l'éloignement des têtes de montage dans une position d'encliquetage des composants sur les zones d'enclenchements de l'au moins une pièce (18, 181, 182) disposée en appui sur les zones d'appui (17) desdites têtes de montage (9, 9a, 9b, 9c, 9d, 9e, 9f).

7. Installation (1) selon la revendication 6, dans laquelle le dispositif de déplacement comprend une table (10) munie d'au moins deux plateaux (10a, 10b) sur lesquels sont montés les au moins deux têtes de montage (9, 9a, 9b, 9c, 9d, 9e, 9f), les plateaux étant mobiles entre eux pour passer de la position de chargement de composants à la position d'appui isostatique de la pièce, et inversement.

8. Installation (1) selon l'une quelconque des revendications 1 à 7, dans laquelle chaque tête de montage (9, 9a, 9b, 9c, 9d, 9e, 9f) comprend un dispositif d'inclinaison (24, 25) permettant de modifier l'orientation de la zone de réception (16) pour la placer dans une position de chargement d'un composant (6) par l'au moins un dispositif de manipulation (26, 261, 262, 263) ou dans une position de transfert dudit composant vers une zone d'enclenchement de la pièce en position sur les zones d'appui (17) des têtes de montage.

9. Installation (1) selon l'une quelconque des revendications 1 à 8, dans laquelle l'au moins un dispositif de manipulation comporte un robot (26, 261, 262) ou un système de translation trois axes (263) sur lequel est montée au moins une pince (27), ladite pince permettant de charger un composant (6) depuis une zone de sortie (7) du dispositif de distribution (3, 4, 5) et de décharger ce composant dans une zone de réception (16) d'une tête de montage (9, 9a, 9b, 9c, 9d, 9e, 9f).

10. Installation (1) selon la revendication 9, dans laquelle l'au moins une pince (27) est mécanique et configurée pour être actionnée sous l'action d'efforts externes exercés sur celle-ci par le dispositif de distribution (3, 4, 5), l'au moins une tête de montage (9, 9a, 9b, 9c, 9d, 9e, 9f) ou le robot (26, 261, 262) ou le système de manipulation trois axes (263).

11. Installation (1) selon la revendication 10, dans laquelle l'au moins une pince (27) comprend une fourche (28) montée en translation sur une platine (30) assujettie au robot (26, 261, 262) ou au système de translation trois axes (263), la fourche étant configurée pour translater d'une position de chargement dans laquelle un logement (29) sur ladite fourche est apte à recevoir la tête (6a) d'un composant (6), vers une position de déchargement dans laquelle elle se rétracte et dégage le logement de ladite tête du composant, la pince comprenant un mécanisme de rappel (32) de la fourche en position de chargement et un mécanisme de butée (33) contre la tête du composant lors du déplacement de la fourche vers sa position de déchargement.

12. Installation (1) selon la revendication 11, dans laquelle l'au moins une pince (27) comprend un mécanisme de maintien (37, 38) de la tête (6a) d'un composant (6) en position dans le logement (29) de la fourche (28).

13. Installation (1) selon l'une quelconque des revendications 9 à 12, dans laquelle l'au moins un dispositif de manipulation est un robot et comprend un système de déplacement dudit robot selon au moins un axe de translation.

14. Installation (1) selon l'une quelconque des revendications 1 à 13, laquelle comprend un mécanisme presseur (41) configuré pour prendre appui et assurer une pression contre une face externe (18b) de l'au moins une pièce (18, 181, 182) lorsque la face interne (18a) de ladite au moins une pièce repose sur l'au moins une zone d'appui (17) de l'au moins une tête de montage (9, 9a, 9b, 9c, 9d, 9e, 9f).

15. Installation (1) selon l'une quelconque des revendications 1 à 14, dans laquelle chaque tête de montage (9, 9a, 9b, 9c, 9d, 9e, 9f) comporte un système de suspension (13, 14) de la zone d'appui (17).

16. Unité de fabrication (100) de pièces (18, 181, 182) destinées à être agrafées ultérieurement sur des supports au moyens de composants (6) de type agrafe, la pièce comprenant une face interne (18a) munie d'au moins une zone d'enclenchement et le composant comportant une tête (6a) configurée pour être encliquetée sur une zone d'enclenchement de la pièce et un corps (6b) configuré pour être encliqueté sur un support lors dudit agrafage ultérieur, ladite unité de fabrication (100) comprenant au moins une presse à injection (101) pour la fabrication des pièces, un robot manipulateur (40) des pièces en sortie de la presse à injection, et au moins une installation (1) de montage d'au moins un composant selon l'une quelconque des revendications 1 à 15.

17. Unité de fabrication (100) selon la revendication 16, dans laquelle le robot manipulateur (40) et l'installation de montage (1) sont configurés pour que le robot manipulateur dépose directement au moins une pièce sur l'au moins une zone d'appui (17) de l'au moins une tête de montage (9, 9a, 9b, 9c, 9d, 9e, 9f).

18. Unité de fabrication (100) selon la revendication 17, laquelle comprend un carter (103) permettant d'isoler l'environnement (102) du robot manipulateur (40) et de la presse à injection (101), l'au moins une installation (1) de montage de composants étant agencée dans ledit environnement (102).

19. Procédé de montage d'au moins un composant (6) de type agrafe sur au moins une pièce (18, 181, 182), la pièce comprenant une face interne (18a) munie d'au moins une zone d'enclenchement et le composant comportant une tête (6a) configurée pour être encliquetée sur une zone d'enclenchement de la pièce et un corps (6b) configuré pour être encliqueté sur un support lors dudit agrafage ultérieur, le procédé comprenant :
- une étape d'alimentation en composants au moyen d'au moins un dispositif de distribution (3, 4, 5) en composants, lesdits composants étant acheminés successivement au niveau d'au moins une zone de sortie (7) ;
- une étape de transfert d'au moins un composant en attente dans l'au moins une zone de sortie (7) vers au moins une zones de réception (16) d'au moins une tête de montage (9, 9a, 9b, 9c, 9d, 9e, 9f), au moyen du dispositif de manipulation (26, 261, 262, 263) des composants ;
- une étape de dépose d'au moins une pièce (18, 181, 182) sur au moins une zone d'appui (17) de l'au moins une tête de montage (9, 9a, 9b, 9c, 9d, 9e, 9f) au moyen d'un dispositif de transfert (40)de l'au moins une pièce ;
- une étape d'encliquetage de l'au moins un composant (6) disposé dans l'au moins une zone de réception (16) de l'au moins une tête de montage (9, 9a, 9b, 9c, 9d, 9e, 9f) vers l'au moins une zone d'enclenchement de l'au moins une pièce (18, 181, 182).

20. Procédé selon la revendication 19, dans lequel au moins deux têtes de montage (9, 9a, 9b, 9c, 9d, 9e, 9f) sont prévues, ledit procédé comprenant une étape de rapprochement entre elles des au moins deux têtes de montage (9, 9a, 9b, 9c, 9d, 9e, 9f) précédant l'étape de transfert et une étape d'écartement entre elles des au moins deux têtes de montage succédant à l'étape de transfert.

21. Procédé selon l'une quelconque des revendications 19 ou 20, lequel comprend une étape de rapprochement de l'au moins une tête de montage (9, 9a, 9b, 9c, 9d, 9e, 9f) vers le dispositif de manipulation de composants (26, 261, 262, 263), précédant l'étape de transfert, et une étape d'éloignement de l'au moins une tête de montage dudit dispositif de manipulation de composants, succédant à l'étape de transfert

22. Procédé selon l'une quelconque des revendications 19 à 21, lequel comprend une étape de changement d'inclinaison de l'au moins une zone de réception (16) de l'au moins une tête de montage (9, 9a, 9b, 9c, 9d, 9e, 9f) pour la disposer dans une orientation préférentielle de transfert d'un composant (6) par le dispositif de manipulation (26, 261, 262, 263) de composants.

## Patentansprüche

1. Anlage (1) zur Befestigung von mindestens einer Komponente (6) vom Typ Klammer an mindestens einem Bauteil (18, 181, 182), wobei das Bauteil eine Innenseite (18a) umfasst, die mit Verriegelungsbereichen versehen ist, und die Komponente (6) einen Kopf (6a) enthält, der konfiguriert ist, um auf einem Verriegelungsbereich des Bauteils eingerastet zu werden, und einen Körper (6b), der konfiguriert ist, um auf einer Unterlage eingerastet zu werden beim anschließenden Festklammern des Bauteils an der Unterlage, wobei die Anlage (1) mindestens eine Vorrichtung zur Verteilung von Komponenten (3, 4, 5) umfasst, die konfiguriert ist, um Komponenten sukzessive zu mindestens einem Austrittsbereich (7) zuzuführen, wobei die Anlage (1) mindestens einen Befestigungskopf (9, 9a, 9b, 9c, 9d, 9e, 9f) umfasst, wobei j eder Befestigungskopf mit einem Aufnahmebereich (16) einer Komponente versehen ist, einem Auflagebereich (17), der geeignet ist, die Innenseite des Bauteils aufzunehmen, und einem Schlagsystems (20), das es ermöglicht, eine Komponente aus dem Aufnahmebereich (16) in einen Verriegelungsbereich des Bauteils zu übergeben, wenn das Bauteil in Position auf dem Auflagebereich (17) ist, und wobei die Anlage (1) mindestens eine Handhabungsvorrichtung (26, 261, 262, 263) umfasst, die konfiguriert ist, um die Komponenten von dem mindestens einen Austrittsbereich (7) in den mindestens einen Aufnahmebereich (16) zu verschieben, vorgehend zur Positionierung des mindestens einen Bauteils, das auf dem mindestens einen Auflagebereich (17) aufliegt.

2. Anlage (1) nach Anspruch 1, die eine Vorrichtung zum Verschieben des mindestens einen Befestigungskopfes (9, 9a, 9b, 9c, 9d, 9e, 9f) umfasst, die konfiguriert ist, um es zu ermöglichen, dass der mindestens eine Befestigungskopf (9, 9a, 9b, 9c, 9d, 9e, 9f) an die mindestens eine Vorrichtung zur Handhabung von Komponenten (26, 261, 262, 263) angenähert wird, in eine angenäherte Position, in der die mindestens eine Handhabungsvorrichtung die Beladung der mindestens einen Komponente auf mindestens einen Aufnahmebereich durchführt, und um die Beabstandung des mindestens einen Befestigungskopfes gegenüber der mindestens einen Komponenten-Handhabungsvorrichtung in eine beabstandete Position zu ermöglichen, in der der mindestens eine Befestigungskopf das mindestens eine Bauteil aufliegend aufnehmen kann, und die Einrastung der mindestens einen Komponente auf dem mindestens einen Verriegelungsbereich durchführen kann.

3. Anlage (1) nach einem der Ansprüche 1 oder 2, die eine Tragstruktur umfasst und einen Tisch, der mit mindestens einer Platte versehen ist, die an der Tragstruktur befestigt ist, und auf der der mindestens eine Befestigungskopf befestigt ist, wobei die Anlage abnehmbare Befestigungsmittel umfasst, die es ermöglichen, den mindestens einen Befestigungskopf zu wechseln oder zu ersetzen.

4. Anlage (1) nach Anspruch 3, wobei die abnehmbaren Befestigungsmittel zwischen der Tragstruktur und der mindestens einen Platte angeordnet sind.

5. Anlage (1) nach einem der Ansprüche 3 oder 4, wobei die mindestens eine Platte des Tisches in einer horizontalen Ebene positioniert ist oder in einer in Bezug auf die Horizontale geneigten Ebene.

6. Anlage (1) nach einem der Ansprüche 1 bis 5, die mindestens zwei Befestigungsköpfe (9, 9a, 9b, 9c, 9d, 9e, 9f) umfasst und eine Vorrichtung zum Verschieben (10a, 10b) der mindestens zwei Befestigungsköpfe (9, 9a, 9b, 9c, 9d, 9e, 9f), die konfiguriert ist, um die Annäherung der Befestigungsköpfe unter ihnen zu ermöglichen, in eine Position der Beladung der Komponenten auf den Aufnahmebereichen (16), und die Beabstandung der Befestigungsköpfe in eine Position des Einrastens der Komponenten an den Verriegelungsbereichen des mindestens einen Bauteils (18, 181, 182), das auf den Auflagebereichen (17) der Befestigungsköpfe (9, 9a, 9b, 9c, 9d, 9e, 9f) aufliegend eingerichtet ist.

7. Anlage (1) nach Anspruch 6, wobei die Verschiebungsvorrichtung einen Tisch (10) umfasst, der mit mindestens zwei Platten (10a, 10b) versehen ist, auf denen die mindestens zwei Befestigungsköpfe (9, 9a, 9b, 9c, 9d, 9e, 9f) befestigt sind, wobei die Platten untereinander beweglich sind, um von der Position der Beladung der Komponenten in die isostatische Auflageposition des Bauteils zu gelangen, und umgekehrt.

8. Anlage (1) nach einem der Ansprüche 1 bis 7, wobei jeder Befestigungskopf (9, 9a, 9b, 9c, 9d, 9e, 9f) eine Neigevorrichtung (24, 25) umfasst, die es ermöglicht, die Ausrichtung des Aufnahmebereichs (16) zu modifizieren, um ihn in eine Position des Beladens der Komponente (6) durch die mindestens eine Handhabungsvorrichtung (26, 261, 262, 263) zu platzieren oder in eine Position des Übergebens der Komponente zu einem Bereich der Verriegelung des Bauteils in Position auf den Auflagebereichen (17) der Befestigungsköpfe.

9. Anlage (1) nach einem der Ansprüche 1 bis 8, wobei die mindestens eine Handhabungsvorrichtung einen Roboter (26, 261, 262) enthält oder ein dreiachsiges Translationssystem (263), an dem mindestens eine Klemme (27) befestigt ist, wobei die Klemme es ermöglicht, eine Komponente (6) aus einem Austrittsbereich (7) der Verteilungsvorrichtung (3, 4, 5) zu laden, und diese Komponente in einen Aufnahmebereich (16) eines Befestigungskopfes (9, 9a, 9b, 9c, 9d, 9e, 9f) zu entladen.

10. Anlage (1) nach Anspruch 9, wobei die mindestens eine Klemme (27) mechanisch ist, und konfiguriert ist, um durch die Betätigung eines externen Kraftaufwands betätigt zu werden, der auf diese von der Verteilungsvorrichtung (3, 4, 5), dem mindestens einen Befestigungskopf (9, 9a, 9b, 9c, 9d, 9e, 9f) oder dem Roboter (26, 261, 262) oder dem dreiachsigen Handhabungssystem (263) ausgeübt wird.

11. Anlage (1) nach Anspruch 10, wobei die mindestens eine Klemme (27) eine Gabel (28) umfasst, die in Translation auf einer Platine (30) befestigt ist, die am Roboter (26, 261, 262) oder dem dreiachsigen Translationssystem (263) festgemacht ist, wobei die Gabel konfiguriert ist, um von einer Beladungsposition, in der ein Gehäuse (29) an der Gabel geeignet ist, den Kopf (6a) einer Komponente (6) aufzunehmen, in eine Entladungsposition zu translatieren, in der sie zurückfährt und den Kopf des Gehäuses der Komponente freigibt, wobei die Klemme einen Mechanismus zum Rückstellen (32) der Gabel in die Beladungsposition umfasst und einen Mechanismus zum Anschlag (33) gegen den Kopf der Komponente während der Verschiebung der Gabel in ihre Entladungsposition.

12. Anlage (1) nach Anspruch 11, wobei die mindestens eine Klemme (27) einen Mechanismus zum Halten (37, 38) des Kopfes (6a) einer Komponente (6) in Position im Gehäuse (29) der Gabel (28) umfasst.

13. Anlage (1) nach einem der Ansprüche 9 bis 12, wobei die mindestens eine Handhabungsvorrichtung ein Roboter ist und ein System zum Verschieben des Roboters entlang mindestens einer Translationsachse umfasst.

14. Anlage (1) nach einem der Ansprüche 1 bis 13, die einen Druckmechanismus (41) umfasst, der konfiguriert ist, um an einer Außenseite (18b) des mindestens einen Bauteils (18, 181, 182) aufzuliegen und Druck dagegen zu gewährleisten, während die Innenseite (18a) des mindestens einen Bauteils auf dem mindestens einen Auflagebereich (17) des mindestens einen Befestigungskopfes (9, 9a, 9b, 9c, 9d, 9e, 9f) ruht.

15. Anlage (1) nach einem der Ansprüche 1 bis 14, wobei jeder Befestigungskopf (9, 9a, 9b, 9c, 9d, 9e, 9f) ein Aufhängungssystem (13, 14) des Auflagebereichs (17) enthält.

16. Herstellungseinheit (100) für Bauteile (18, 181, 182), die dazu bestimmt sind, anschließend mittels Komponenten (6) vom Typ Klammer an den Unterlagen festgeklammert zu werden, wobei das Bauteil eine Innenseite (18a) umfasst, die mit mindestens einem Verriegelungsbereich versehen ist, und die Komponente einen Kopf (6a) enthält, der konfiguriert ist, um an einem Verriegelungsbereich des Bauteils eingerastet zu werden, und einen Körper (6b), der konfiguriert ist, um an einer Unterlage beim anschließenden Festklammern eingerastet zu werden, wobei die Herstellungseinheit (100) mindestens eine Injektionspresse (101) zur Herstellung der Bauteile umfasst, einen Roboter zur Handhabung (40) der Bauteile, die aus der Injektionspresse austreten, und mindestens eine Anlage (1) zur Befestigung der mindestens einen Komponente nach einem der Ansprüche 1 bis 15.

17. Herstellungseinheit (100) nach Anspruch 16, wobei der Handhabungsroboter (40) und die Befestigungsanlage (1) so konfiguriert sind, dass der Handhabungsroboter mindestens ein Bauteil direkt auf den mindestens einen Auflagebereich (17) des mindestens einen Befestigungskopfes (9, 9a, 9b, 9c, 9d, 9e, 9f) ablegt.

18. Herstellungseinheit (100) nach Anspruch 17, die einen Kasten (103) umfasst, der es ermöglicht, die Umgebung (102) des Handhabungsroboters (40) und der Injektionspresse (101) zu isolieren, wobei die mindestens eine Anlage (1) zur Befestigung der Komponenten in der Umgebung (102) angeordnet ist.

19. Verfahren zur Befestigung von mindestens einer Komponente (6) vom Typ Klammer an mindestens einem Bauteil (18, 181, 182), wobei das Bauteil eine Innenseite (18a) umfasst, die mit mindestens einem Verriegelungsbereich versehen ist, und die Komponente einen Kopf (6a) enthält, der konfiguriert ist, um an einem Verriegelungsbereich des Bauteils eingerastet zu werden, und einen Körper (6b), der konfiguriert ist, um an einer Unterlage beim anschließenden Festklammern eingerastet zu werden, wobei das Verfahren umfasst:
- einen Schritt zur Versorgung von Komponenten mittels mindestens einer Komponenten-Verteilungsvorrichtung (3, 4, 5), wobei die Komponenten sukzessive im Bereich von mindestens einem Austrittsbereich (7) zugeführt werden;
- einen Schritt zum Übergeben von mindestens einer Komponente, die in dem mindestens einen Austrittsbereich (7) in Bereitschaft ist, auf mindestens einen Aufnahmebereich (16) von mindestens einem Befestigungskopf (9, 9a, 9b, 9c, 9d, 9e, 9f), mittels der Handhabungsvorrichtung (26, 261, 262, 263) der Komponenten;
- einen Schritt zum Ablegen des mindestens einen Bauteils (18, 181, 182) auf mindestens einem Auflagebereich (17) des mindestens einen Befestigungskopfes (9, 9a, 9b, 9c, 9d, 9e, 9f), mittels einer Vorrichtung zum Übergeben (40) des mindestens einen Bauteils;
- einen Schritt zum Einrasten der mindestens einen Komponente (6), die in dem mindestens einen Aufnahmebereich (16) des mindestens einen Befestigungskopfes (9, 9a, 9b, 9c, 9d, 9e, 9f) eingerichtet ist, zu dem mindestens einen Verriegelungsbereich des mindestens einen Bauteils (18, 181, 182).

20. Verfahren nach Anspruch 19, wobei mindestens zwei Befestigungsköpfe (9, 9a, 9b, 9c, 9d, 9e, 9f) vorgesehen sind, wobei das Verfahren einen Schritt der Annäherung der mindestens zwei Befestigungsköpfe (9, 9a, 9b, 9c, 9d, 9e, 9f) zwischen ihnen umfasst, vor dem Übergabeschritt, und einen Schritt des Entfernens der mindestens zwei Befestigungsköpfe zwischen ihnen, nach dem Übergabeschritt.

21. Verfahren nach einem der Ansprüche 19 oder 20, das einen Schritt zur Annäherung des mindestens einen Befestigungskopfes (9, 9a, 9b, 9c, 9d, 9e, 9f) an die Komponenten-Handhabungsvorrichtung (26, 261, 262, 263) umfasst, vor dem Übergabeschritt, und einem Schritt der Beabstandung des mindestens einen Befestigungskopfes der Komponenten-Handhabungsvorrichtung, nach dem Übergabeschritt.

22. Verfahren nach einem der Ansprüche 19 bis 21, das einen Schritt der Neigungsänderung des mindestens einen Aufnahmebereichs (16) des mindestens einen Befestigungskopfes (9, 9a, 9b, 9c, 9d, 9e, 9f) umfasst, um ihn in einer bevorzugten Ausrichtung des Übergebens der Komponente (6) durch die Komponenten-Handhabungsvorrichtung (26, 261, 262, 263) anzuordnen.

## Claims

1. System (1) for mounting at least one clip-type component (6) on at least one part (18, 181, 182), the part comprising an inner face (18a) provided with engagement areas and the component (6) having a head (6a) designed to be snapped onto an engagement area of the part and a body (6b) designed to be snapped onto a support during subsequent fastening of said part onto said support, said system (1) comprising at least one component dispensing device (3, 4, 5) designed to successively deliver components to at least one exit area (7), the system (1) comprising at least one mounting head (9, 9a, 9b, 9c, 9d, 9e, 9f), each mounting head being provided with an area (16) for receiving a component, a bearing area (17) able to receive the inner face of the part, and an impact system (20) used to transfer a component from the receiving area (16) to an engagement area of the part when said part is in position on the bearing area (17) and said system (1) comprising at least one manipulation device (26, 261, 262, 263) designed to move components from the at least one exit area (7) to the at least one receiving area (16) prior to positioning the at least one part in contact with the at least one bearing area (17).

2. System (1) according to Claim 1, which comprises a device for moving the at least one mounting head (9, 9a, 9b, 9c, 9d, 9e, 9f) designed to allow the at least one mounting head (9, 9a, 9b, 9c, 9d, 9e, 9f) to move towards the at least one component manipulation device (26, 261, 262, 263), in a brought-together position in which the at least one manipulation device loads at least one component onto at least one receiving area, and to allow the at least one mounting head to be moved away from the at least one component manipulation device, in a remote position in which the at least one mounting head can receive the at least one part in a supporting manner and snap the at least one component onto the at least one engagement area.

3. System (1) according to either one of Claims 1 or 2, which comprises a support structure and a table provided with at least one platform which is mounted on the support structure and on which the at least one mounting head is mounted, said system comprising removable mounting means enabling the at least one mounting head to be changed or replaced.

4. System (1) according to Claim 3, wherein the removable mounting means are arranged between the support structure and the at least one platform.

5. System (1) according to either one of Claims 3 or 4, wherein the at least one platform of the table is positioned in a horizontal plane or a plane inclined to the horizontal.

6. System (1) according to one of Claims 1 to 5, which comprises at least two mounting heads (9, 9a, 9b, 9c, 9d, 9e, 9f) and a device (10a, 10b) for moving the at least two mounting heads (9, 9a, 9b, 9c, 9d, 9e, 9f) designed to allow the mounting heads to be moved closer together in a position for loading components onto the receiving areas (16) and to allow the mounting heads to be moved away from each other in a position for snapping the components onto the engagement areas of the at least one part (18, 181, 182) arranged bearing on the bearing areas (17) of said mounting heads (9, 9a, 9b, 9c, 9d, 9e, 9f).

7. System (1) according to Claim 6, wherein the movement device comprises a table (10) provided with at least two platforms (10a, 10b) on which the at least two mounting heads (9, 9a, 9b, 9c, 9d, 9e, 9f) are mounted, the platforms being movable between them to move from the component loading position to the isostatic support position of the part, and vice versa.

8. System (1) according to one of Claims 1 to 7, wherein each mounting head (9, 9a, 9b, 9c, 9d, 9e, 9f) comprises a tilting device (24, 25) for modifying the orientation of the receiving area (16) in order to place it in a position for loading a component (6) by the at least one manipulation device (26, 261, 262, 263) or in a position for transferring said component to an engagement area of the part in position on the bearing areas (17) of the mounting heads.

9. System (1) according to one of Claims 1 to 8, wherein the at least one manipulation device has a robot (26, 261, 262) or a three-axis translation system (263) on which at least one gripper (27) is mounted, said gripper enabling a component (6) to be loaded from an exit area (7) of the dispensing device (3, 4, 5) and enabling this component to be unloaded into a receiving area (16) of a mounting head (9, 9a, 9b, 9c, 9d, 9e, 9f).

10. System (1) according to Claim 9, wherein the at least one gripper (27) is mechanical and designed to be actuated under the action of external forces exerted on it by the dispensing device (3, 4, 5), the at least one mounting head (9, 9a, 9b, 9c, 9d, 9e, 9f) or the robot (26, 261, 262) or the three-axis manipulation system (263).

11. System (1) according to Claim 10, wherein the at least one gripper (27) comprises a fork (28) translatably mounted on a plate (30) secured to the robot (26, 261, 262) or to the three-axis translation system (263), the fork being designed to move from a loading position in which a housing (29) on said fork is able to receive the head (6a) of a component (6), to an unloading position in which it retracts and clears the housing of said head of the component, the gripper comprising a mechanism (32) for returning the fork to the loading position and a mechanism (33) for stopping against the head of the component when the fork moves to its unloading position.

12. System (1) according to Claim 11, wherein the at least one gripper (27) comprises a mechanism (37, 38) for holding the head (6a) of a component (6) in position in the housing (29) of the fork (28).

13. System (1) according to one of Claims 9 to 12, wherein the at least one manipulation device is a robot and comprises a system for moving said robot along at least one translation axis.

14. System (1) according to one of Claims 1 to 13, which comprises a pressing mechanism (41) designed to bear against and exert pressure on an outer face (18b) of the at least one part (18, 181, 182) when the inner face (18a) of said at least one part rests on the at least one bearing area (17) of the at least one mounting head (9, 9a, 9b, 9c, 9d, 9e, 9f).

15. System (1) according to one of Claims 1 to 14, wherein each mounting head (9, 9a, 9b, 9c, 9d, 9e, 9f) has a suspension system (13, 14) for the bearing area (17).

16. Unit (100) for manufacturing parts (18, 181, 182) intended to be subsequently fastened onto supports by means of clip-type components (6), the part comprising an inner face (18a) provided with at least one engagement area and the component having a head (6a) designed to be snapped onto an engagement area of the part and a body (6b) designed to be snapped onto a support during said subsequent fastening, said manufacturing unit (100) comprising at least one injection moulding machine (101) for manufacturing parts, a robot (40) for manipulating the parts leaving the injection moulding machine, and at least one system (1) for mounting at least one component according to one of Claims 1 to 15.

17. Manufacturing unit (100) according to Claim 16, wherein the robot manipulator (40) and the mounting system (1) are designed so that the robot manipulator directly places at least one part on the at least one bearing area (17) of the at least one mounting head (9, 9a, 9b, 9c, 9d, 9e, 9f).

18. Manufacturing unit (100) according to Claim 17, which comprises a casing (103) which can isolate the environment (102) of the robot manipulator (40) and the injection moulding machine (101), the at least one system (1) for mounting components being arranged in said environment (102).

19. Method for mounting at least one clip-type component (6) on at least one part (18, 181, 182), the part comprising an inner face (18a) provided with at least one engagement area and the component having a head (6a) designed to be snapped onto an engagement area of the part and a body (6b) designed to be snapped onto a support during said subsequent fastening, the method comprising:
- a step of supplying components by means of at least one component dispensing device (3, 4, 5), said components being delivered successively to at least one exit area (7);
- a step of transferring at least one component waiting in the at least one exit area (7) to at least one receiving area (16) of at least one mounting head (9, 9a, 9b, 9c, 9d, 9e, 9f) by means of the component manipulation device (26, 261, 262, 263);
- a step of placing at least one part (18, 181, 182) on at least one bearing area (17) of the at least one mounting head (9, 9a, 9b, 9c, 9d, 9e, 9f) by means of a device (40) for transferring the at least one part;
- a step of snapping the at least one component (6) arranged in the at least one receiving area (16) of the at least one mounting head (9, 9a, 9b, 9c, 9d, 9e, 9f) into the at least one engagement area of the at least one part (18, 181, 182).

20. Method according to Claim 19, wherein at least two mounting heads (9, 9a, 9b, 9c, 9d, 9e, 9f) are provided, said method comprising a step of moving the at least two mounting heads (9, 9a, 9b, 9c, 9d, 9e, 9f) closer together preceding the transfer step and a step of moving the at least two mounting heads away from one another following the transfer step.

21. Method according to either one of Claims 19 or 20, which comprises a step of moving the at least one mounting head (9, 9a, 9b, 9c, 9d, 9e, 9f) closer to the component manipulation device (26, 261, 262, 263), preceding the transfer step, and a step of moving the at least one mounting head away from said component manipulation device, following the transfer step.

22. Method according to one of Claims 19 to 21, which comprises a step of changing the inclination of the at least one receiving area (16) of the at least one mounting head (9, 9a, 9b, 9c, 9d, 9e, 9f) to arrange it in a preferred orientation for the transfer of a component (6) by the component manipulation device (26, 261, 262, 263).
